# EUROPÄISCHE PATENTSCHRIFT

(11) **EP 1 802 502 B1**
(45) Veröffentlichungstag und Bekanntmachung des Hinweises auf die Patenterteilung: **26.08.2009**
(21) Anmeldenummer: 05789546.8
(22) Anmeldetag: 28.09.2005
(51) Int. Cl.: B60T 8/36, B62L 3/00

(54) **KRAFTRADBREMSANLAGE**
MOTORCYCLE BRAKE SYSTEM
SYSTEME DE FREINAGE DE MOTOCYCLETTE

(30) Priorität: 13.10.2004 DE 102004049749; 05.02.2005 DE 102005005390
(43) Veröffentlichungstag der Anmeldung: 04.07.2007
(73) Patentinhaber: Continental Teves AG & Co. oHG, 60488 Frankfurt (DE)
(72) Erfinder: HINZ, Axel, 61267 Neu-Anspach (DE); VOGEL, Günther, 63303 Dreieich (DE)
(86) Internationale Anmeldenummer: PCT/EP2005/054882
(87) Internationale Veröffentlichungsnummer: WO 2006/040262

(56) Entgegenhaltungen:
- EP-A- 1 277 635
- DE-A1- 4 406 269
- DE-A1- 10 209 984
- PATENT ABSTRACTS OF JAPAN Bd. 2000, Nr. 02, 29. Februar 2000 (2000-02-29) -& JP 11 314591 A (YAMAHA MOTOR CO LTD), 16. November 1999 (1999-11-16)
- PATENT ABSTRACTS OF JAPAN Bd. 2000, Nr. 06, 22. September 2000 (2000-09-22) -& JP 2000 071963 A (NIPPON ABS LTD), 7. März 2000 (2000-03-07)

## Beschreibung

Die Erfindung betrifft eine Kraftradbremsanlage nach dem Oberbegriff des Patentanspruchs 1.

Aus der EP 1 277 635 A2 ist bereits eine derartige Kraftradbremsanlage bekannt. Die Bremsanlage weist einen hydraulisch betätigbaren Vorderrad- und Hinterradbremskreis auf, die über ein paar fuß- bzw. handbetätigte Hauptbremszylinder verfügen. Zur Bremsschlupfregelung sind im Vorderrad- als auch Hinterradbremskreis elektromagnetisch aktivierbare Ein- und Auslassventile eingesetzt, sowie mit einer Pumpe zum Druckaufbau in den beiden Bremskreisen unabhängig von der Betätigung der beiden Hauptbremszylinder.

Zur Erfassung des dem Vorderradbremskreis zugeführten Hauptbremszylinderdrucks ist zwischen dem Einlassventil und dem Hauptbremszylinder am Vorderradbremskreis ein erster Drucksensor angeordnet. Ein zweiter Drucksensor erfasst den Radbremsdruck in einer am Hinterradbremskreis angeschlossenen Hinterradbremse. Zusätzlich ist auch ein den Hauptbremszylinderdruck im Hinterradbremskreis erfassender Drucksensor vorgesehen sein.

Damit bei der bekannten Kraftradbremse auf kleinstem Bauraum die hydraulische Schaltung realisiert werden kann, kommt einer geschickten Anordnung aller funktionskritischen Komponenten eine besondere Bedeutung zu.

Ferner ist aus JP 11314591 A eine Kraftradbremsanlage bekannt, mit einem elastisch an einer Fahrzeugbodenplatte befestigten Aufnahmekörper, der mehrere Bremsleitungen, eine Pumpe und einen Pumpenmotor aufweist. Die Pumpe und der Pumpenmotor erstrecken sich mit ihren Längsachsen in die Richtung der Fahrzeugbreite. Weiterhin sind die Bremsleitungen im Bereich des Aufnahmekörpers parallel zur Fahrzeugbreite angeordnet.

Daher ist es die Aufgabe der vorliegenden Erfindung, eine Kraftradbremsanlage der bekannten Art derart zu gestalten, dass ein möglichst kompakter Aufbau der Bremsanlage mit einer einfachen, zuverlässigen hydraulischen Verbindung für die beiden Hauptbremszylinder und die beiden Radbremsen gewährleistet ist.

Diese Aufgabe wird für eine Kraftradbremsanlage der angegebenen Art mit den kennzeichnenden Merkmalen des Patentanspruchs 1 gelöst.

Weitere Merkmale und Vorteile der Erfindung gehen aus den Unteransprüchen sowie aus der nachfolgenden Beschreibung eines Ausführungsbeispiels anhand mehrerer Zeichnungen hervor.

### Es zeigen:

- Figur 1: den Hydraulikschaltplan für eine Kraftradbremsanlage,
- Figur 2: eine Perspektivansicht eines für die Kraftradbremsanlage nach Figur 1 vorgesehenen Aufnahmekörpers,
- Figur 3: eine um 180 Grad gedrehte Perspektivansicht des Aufnahmekörpers nach Figur 2 auf dessen Hinterseite.

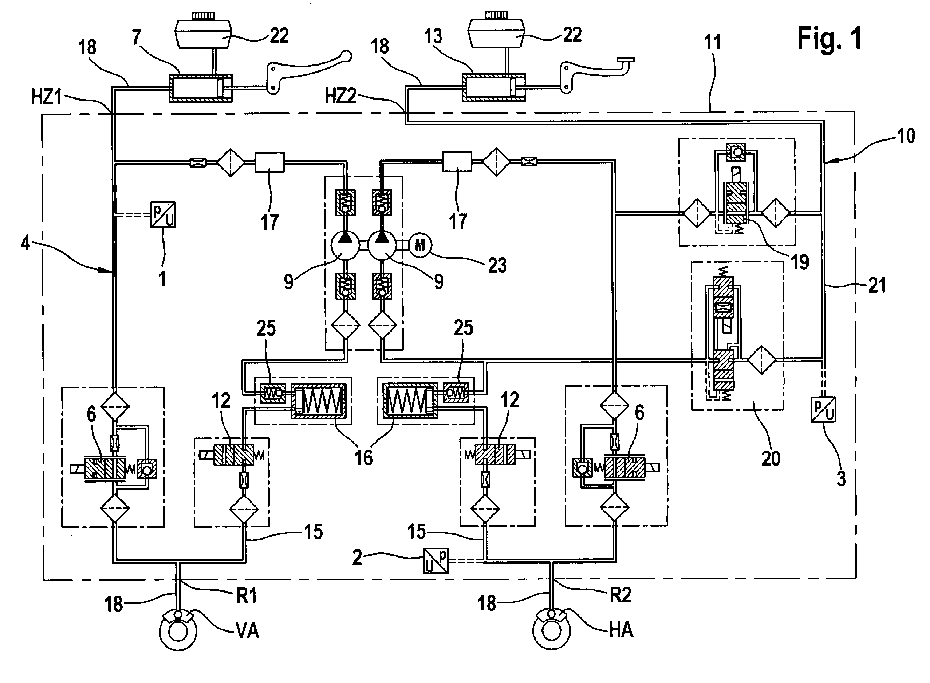

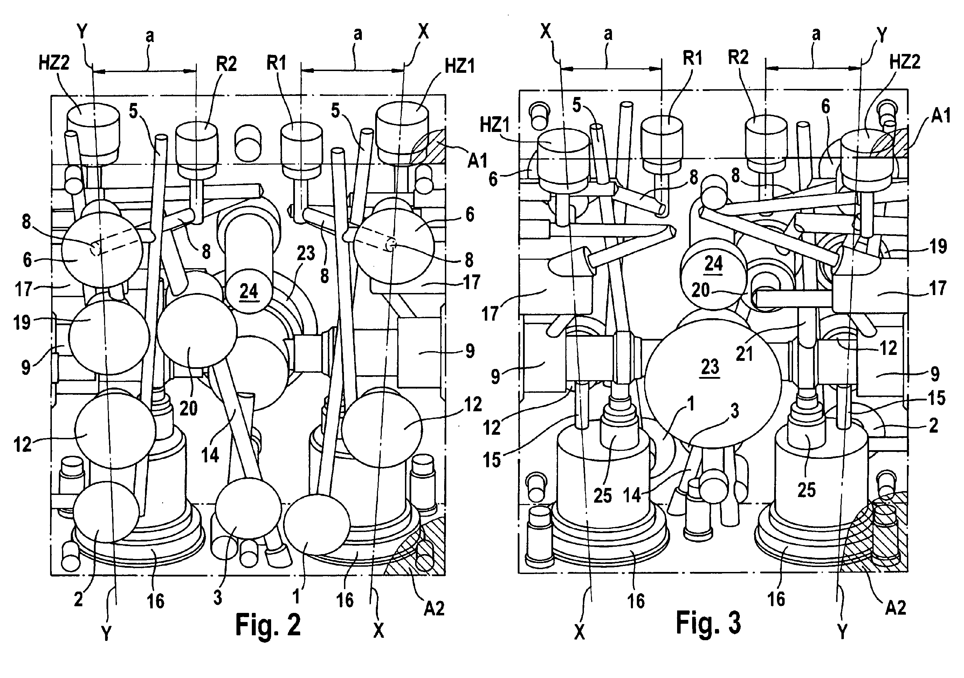

Die Figur 1 zeigt zum besseren Verständnis des in den Fig. 2, 3 abgebildeten Aufnahmekörpers 11 den Hydraulikschaltplan der erfindungsgemäßen Kraftradbremsanlage. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft proportional betätigbaren Hauptbremszylinder 7 und mit einem fußkraftproportional betätigbaren Hauptbremszylinder 13 an der Hinterradbremse HA.

Zur Bremsschlupfregelung sind im Vorderrad- als auch Hinterradbremskreis 4, 10 elektromagnetisch betätigbare Ein- und Auslassventile 6, 12 eingesetzt, wobei jeweils das in Grundstellung geöffnete Einlassventil 6 in die Bremsleitung des Vorder- bzw. Hinterradbremskreises 4, 10 eingesetzt ist, welche den zugehörigen Hauptbremszylinder 7, 13 mit der Vorderrad- bzw. der Hinterradbremse VA, HA verbindet. Das in Grundstellung geschlossene Auslassventil 12 ist jeweils in eine Rücklaufleitung 15 eines jeden Bremskreises eingesetzt, welche die Vorder- bzw. Hinterradbremse VA, HA mit jeweils einem Niederdruckspeicher 16 und über Rückschlagventile 25 zur Saugseite einer zweikreisig aufgeteilten Pumpe 9 verbindet, die nach dem Rückförderprinzip arbeitet. Die Pumpe 9 steht über in die beiden Bremskreise eingesetzte Geräuschdämpfungskammern 17 mit den Bremsleitungen 18 in Verbindung, so dass eine bedarfsgerechte Rückförderung des jeweils von der Vorder- bzw. Hinterradbremse VA, HA abgelassenen Bremsflüssigkeitsvolumens gewährleistet ist.

Der Hinterradbremskreis 10 weist zusätzlich zu den bereits beschriebenen Merkmalen des Vorderradbremskreises 4 ein zwischen dem Hauptbremszylinder 13 und dem Einlassventil 6 in die Bremsleitung 18 eingesetztes, elektromagnetisch betätigbares Trennventil 19 auf, das in seiner Grundstellung geöffnet ist. Ferner ist zwischen dem Trennventil 19 und dem Hauptbremszylinder 13 an die Bremsleitung 18 des Hinterradbremskreises 10 ein über ein elektrisches Umschaltventil 20 führender Saugpfad 21 zur Pumpe 9 angeschlossen, wodurch der im Hinterradbremskreis 10 wirksame Pumpenteil bei elektrischer Erregung des Umschaltventils 20 Druckmittel zum Druckaufbau in der Hinterradbremse 14 aus dem Hauptbremszylinder 13 und dem am Hauptbremszylinder 13 angeschlossenen Ausgleichsbehälter 22 zu entnehmen und zur Hinterradbremse 14 zu fördern vermag, während das Trennventil 19 in seiner elektrisch erregten Sperrstellung verharrt.

Zur Erfassung des dem Vorderradbremskreis 4 zugeführten Hauptbremszylinderdrucks befindet sich stromaufwärts des Einlassventils 6 an der Bremsleitung 18 des Vorderradbremskreises 4 ein erster Drucksensor 1. Zur Erfassung des Radbremsdrucks im Hinterradbremskreis 10 ist ein zweiter Drucksensor 2 zwischen dem Einlassventil 6 und dem Auslassventil 12 am Hinterradbremskreis 10 angeschlossen.

Durch die Einlassventile 6 lässt sich in der Zweikreisbremsanlage der in den Bremsleitungen 18 erzeugte Bremsdruck jederzeit begrenzen. Der Bremsdruckabbau in den Radbremsen geschieht über die elektromagnetisch aufschaltbaren Auslassventile 12 in Richtung der beiden Niederdruckspeicher 16.

Ein dritte Drucksensor 3 ist stromaufwärts des Trennventils 19 am Hinterradbremskreis 10 angeschlossen, um auch den auf die Hinterradbremse HA ausgeübten Hauptbremszylinderdruck erfassen zu können.

Der durch den ersten Drucksensor 1 im Vorderradbremskreis 4 erfasste Hauptbremszylinderdruck bildet die Führungsgröße zur elektrischen Aktivierung der im Hinterradbremskreis 10 eingesetzten Pumpe 9, die im Zusammenwirken mit den Ein- und Auslassventilen 6, 12, dem Trenn- und Umschaltventil 19, 20 einen automatischen Bremsdruckaufbau im Hinterradbremskreis 10 gemäß einer in einem Steuergerät abgelegten elektronischen Bremskraftverteilungskennlinie bewirkt, wenn ausschließlich der am Vorderradbremskreis 4 angeschlossene Hauptbremszylinder 7 betätigt wird.

Zur Auswertung von Signalen des ersten, zweiten und dritten Drucksensors 1, 2, 3 ist eine Logikschaltung im elektronischen Steuergerät vorgesehen, in dem abhängig vom Auswerteergebnis der Drucksensorsignale mittels der elektrisch betätigbaren Pumpe 9 ein Hydraulikdruck im Hinterradbremskreis 10 erzeugt wird.

Das nicht näher dargestellte Steuergerät bildet bevorzugt ein auf dem Aufnahmekörper 11 angebrachtes deckelförmiges Anbauteil, das vorzugsweise zur elektrischen Kontaktierung auf die im Aufnahmekörper 11 integrierten drei Drucksensoren 1, 2, 3 und die darin integrierten Ein- und Auslassventile 6, 11 aufgesteckt ist. Der Aufnahmekörper 11 lässt sich somit aufgrund der besonders kompakten Bauweise in Nähe einer Batterie an einem Kraftradrahmen befestigen.

Ausgehend vom in Fig. 1 dargestellten Hydraulikkonzept werden nunmehr die wesentlichen Merkmale der Erfindung anhand den Figuren 2 und 3 erläutert.

Die Figur 2 verdeutlicht in einer Perspektivansicht den blockförmigen Aufnahmekörper 11, mit mehreren für den Vorderrad- und Hinterradbremskreis 4, 10 erforderlichen Druckkanälen zur hydraulischen Verbindung der beiden Hauptbremszylinder 7, 13 mit der Vorder- und Hinterradbremse VA, HA, wozu an einer horizontalen Seitenfläche A1 des Aufnahmekörpers 11 ein paar mit der Hinterrad- und Vorderradbremse HA, VA verbindbare Radbremsanschlüsse R1, R2 einmünden, die zwischen einem paar Druckanschlüssen HZ1, HZ2 angeordnet sind, welche mit den beiden unabhängig voneinander betätigbaren Hauptbremszylindern 7, 13 verbindbar sind.

Hierbei ist für jeden Bremskreis 4, 10 im Aufnahmekörper 11 ein Abstand a zwischen dem Radbremsanschluss R1 bzw. R2 und einem dem jeweiligen Radbremsanschluss zugeordneten Einlassventil 6 derart bemessen, dass mittels einer Sackbohrung 8, die in eine Öffnung der für das jeweilige Einlassventil 6 vorgesehenen Aufnahmebohrung einmündet, eine direkte hydraulische Verbindung zum Radbremsanschluss R1 bzw. R2 des Vorderrad- bzw. Hinterradbremskreises 4, 10 gewährleistet ist. Durch den Abstand a lässt sich ein besonders einfacher, kurzer Druckkanal herstellen, der als Schrägkanal ausgeführt ist und der am Ende keinen Kugelverschluss oder Verschlussstopfen erfordert.

Der Aufnahmekörper 11 weist ferner den ersten Drucksensor 1 in einer vom Druckanschluss HZ1 abgewandten, seitlich zu einer ersten Bohrungsreihe X versetzt angeordneten Aufnahmebohrung auf, die quer zum Druckanschluss HZ1 in eine Stirnfläche A2 des Aufnahmekörpers 11 einmündet. Durch den geringen Versatz des ersten Drucksensors 1 zur ersten Bohrungsreihe X lässt sich von der Seitenfläche A1 der zum Drucksensor 1 führende Druckkanal 5 vorteilhaft als Sackbohrung ausführen, die lediglich an der Seitenfläche A1 zu verschließen ist. Der zweite Drucksensor 2 ist in einer vom Druckanschluss HZ2 abgewandten Aufnahmebohrung am Ende einer zweiten Bohrungsreihe Y eingesetzt, die ebenfalls quer zum Druckanschluss HZ2 in die Stirnfläche A2 des Aufnahmekörpers 11 einmündet. Auch zu diesem Drucksensor 2 führt vorteilhaft aus Richtung der Seitenfläche A1 ein als Sackbohrung ausgeführter Druckkanal 5, der neben dem Radbremsanschluss 2 unter einem definierten Richtungswinkel zwischen zwei für das Trenn- und Umschaltventil 19, 20 vorgesehenen Aufnahmebohrungen in den Aufnahmekörper 11 führt.

In der Stirnfläche des Aufnahmekörper 11 sind zwei Aufnahmebohrungen in der ersten Bohrungsreihe X und vier Aufnahmebohrungen in der zweiten Bohrungsreihe Y angeordnet, wobei in der vertikal verlaufenden ersten Reihe X ausschließlich das zur Bremsschlupfregelung im Vorderradbremskreis 4 erforderliche Ein- und Auslassventil 6, 12 angeordnet ist, während die vertikal angeordnete zweite Reihe Y ausschließlich das zur Bremsschlupfregelung im Hinterradbremskreis 10 erforderliche Ein- und Auslassventil 6, 12, das elektrisches Trennventil 19 sowie der zweite Drucksensor 2 aufnimmt.

Zwischen den beiden Bohrungsreihen X, Y mündet ein weiteres paar zueinander versetzte Aufnahmebohrungen in die Stirnfläche A2 des Aufnahmekörpers 11 ein, in die das elektrisches Umschaltventil 20 und der weitere (dritte) Drucksensor 3 eingesetzt sind.

Ein Druckkanal 14 durchquert die für den weiteren Drucksensor 3 und das elektrischen Umschaltventil 20 vorgesehenen Aufnahmebohrungen in Richtung des Druckanschlusses HZ2, welcher mit dem für die Betätigung des Hinterradbremskreises 10 vorgesehenen Hauptbremszylinder 13 verbindbar ist.

Die in die Seitenfläche A1 des Aufnahmekörpers 11 einmündenden beiden Druckanschlüsse HZ1, HZ2 sind in etwa fluchtend zur Längsebene der beiden Bohrungsreihen X, Y angeordnet, während die in die Seitenfläche A1 des Aufnahmekörpers 11 einmündenden beiden Radbremsanschlüsse R1, R2 zwischen den beiden Druckanschlüssen HZ1, HZ2 parallel ausgerichtet sind. Damit ergibt sich für den Aufnahmekörper 11 ein Anschlussbild, das an der Seitenfläche A1 die Verschraubung sämtlicher zu den beiden Hauptbremszylindern HZ1, HZ2 und den Radbremsen VA, HA führenden Bremsleitungen ermöglicht.

Ferner gehen aus der Ansicht nach Figur 2 im Hintergrund der sich als Sachbohrungen in die Stirnfläche teilweise erstreckenden Aufnahmebohrungen weitere Aufnahmebohrungen für die aus Figur 1 bekannten Niederdruckspeicher 16, die Pumpe 9 und den die Pumpe 9 antreibenden Elektromotor 23 hervor, wobei die für die beiden Niederdruckspeicher 16 vorgesehenen Aufnahmebohrungen hinter den beiden flachen Aufnahmebohrungen des ersten und zweiten Drucksensors 1, 2 angeordnet sind.

Die Aufnahmebohrung für die Pumpe 9 durchdringt den Aufnahmekörper 11 oberhalb der für die Auslassventile 12 in den Bohrungsreihen X, Y vorgesehenen Aufnahmebohrungen in Horizontalrichtung, wobei die Positionen der für das Trennventil 19 und das Umschaltventil 20 vorgesehenen Aufnahmebohrungen im Aufnahmekörper 11 derart gewählt sind, dass ein hinreichender Abstand zur Integration der für die Pumpe 9 vorgesehenen Aufnahmebohrung im Aufnahmekörper 11 gewährleistet ist. Da eine deaxierte Radialkolbenpumpe zum Einsatz kommt, ist zur Realisierung des Kolbenversatzes die Pumpenaufnahmebohrung zweiteilig ausgeführt. Zwischen dieser zweiteiligen Pumpenaufnahmebohrung mündet aus entgegengesetzter Richtung zur Stirnfläche A2 in den Aufnahmekörper 11 eine Aufnahmebohrung für den die Pumpe 9 antreibenden Elektromotor 23 ein.

Die aus Figur 1 bekannten Geräuschdämpfungskammern 17 sind zweckmäßigerweise als horizontal von beiden Seiten in den Aufnahmekörper 11 einmündende Sackbohrungen zwischen den Aufnahmebohrungen der Einlassventile 6 und der Pumpenaufnahmebohrung positioniert. Hierdurch ergeben sich die aus Figur 1 prinzipiell ersichtlichen Hydraulikverbindungen zur Pumpenaufnahmebohrung und zu den Druckanschlüssen HZ1, HZ2 als besonders einfach herzustellende Druckkanäle unter Einsparung von aufwendigen Kugelverschlüssen.

Infolge der geschickten Anordnung der Bohrungsreihen X, Y innerhalb der beiden Seitenbereiche der Stirnfläche A2 lassen sich die erforderlichen Druckkanäle durch einfache, überwiegend kurze Bohroperationen herstellen. Der Zerspanungsaufwand ist minimiert und erlaubt überdies weitgehende Gestaltungsfreiheiten zur Ausführung der Aufnahmebohrung für den Elektromotor 23, zur Integration des zwischen Elektromotor 23 und Pumpe 9 erforderlichen Getriebes als auch zur Positionierung eines Elektrosteckers 24 im Aufnahmekörpers zum Anschluss des Elektromotors 23 an das Steuergerät.

Die Figur 3 zeigt den Aufnahmekörper 11 nach Figur 2 von der Rückseite her gesehen und vervollständigt somit den bisher beschriebenen Aufbau des Aufnahmekörpers 11 um den Abbildungsbereich, der in der Darstellung nach Figur 2 teilweise verdeckt ist. Die zu Figur 1 und 2 beschriebenen Einzelheiten sind entsprechend in Figur 3 vorzufinden.

Für die Kraftradbremsanlage gilt grundsätzlich:
1. Eine Blockierneigung des Vorder- bzw. des Hinterrades wird mittels nicht abgebildeter Raddrehzahlsensoren und deren Signalauswertung im Steuergerät sicher erkannt. Das im Vorderrad- bzw. im Hinterradbremskreis 4, 10 angeordnete Einlassventil 6 wird über das Steuergerät elektromagnetisch geschlossen, um einen weiteren Druckaufbau im Vorderrad- bzw. Hinterradbremskreis 4, 10 zu unterbinden.
2. Sollte zur Reduzierung der Blockierneigung zusätzlich ein weiterer Druckabbau im Vorderrad- bzw. Hinterradbremskreis 4, 10 erforderlich sein, so wird dies durch das Öffnen des jeweils mit dem Niederdruckspeicher 16 verbindbaren, normalerweise stromlos geschlossenen Auslassventil 12 erreicht. Das Auslassventil 12 wird geschlossen, sobald die Radbeschleunigung wieder über ein bestimmtes Maß hinaus anwächst. In der Druckabbauphase bleibt das entsprechende Einlassventil 6 geschlossen, so dass sich der im Vorderrad- bzw. Hinterradbremskreis 4, 10 erzeugte Hauptbremszylinderdruck nicht auf den Vorderrad- bzw. Hinterradbremskreis 4, 10 fortpflanzen kann.
3. Wenn die ermittelten Schlupfwerte wieder einen Druckaufbau im Vorderrad- bzw. Hinterradbremskreis 4, 10 erlauben, wird das Einlassventil 6 entsprechend der Anforderung eines im Steuergerät integrierten Schlupfreglers zeitlich begrenzt geöffnet. Das für den Druckaufbau erforderliche Hydraulikvolumen wird von der Pumpe 9 zu Verfügung gestellt.

Außerhalb der Bremsschlupfregelung erfolgt aufgrund des hydraulischen Schaltungskonzepts bei (fußkraftproportionaler) Betätigung des am Hinterradbremskreises 10 angeschlossenen Hauptbremszylinders 13 ausschließlich eine kraftproportionale Druckbeaufschlagung der Hinterradbremse HA, d.h. der Vorderradbremskreis 4 verharrt bis zur (handkraftproportionalen) Betätigung des am Vorderradbremskreis 4 angeschlossenen Hauptbremszylinders 7 drucklos.

Als weitere Besonderheit der vorgestellten Kraftradbremsanlage gilt, dass bei kraftproportionaler Betätigung des Vorderradbremskreises die Hinterradbremse durch eine geeignete Pumpenansteuerung mitgebremst wird. Die Pumpe 9 entnimmt hierzu über das elektrisch geöffnete Umschaltventil 20 Druckmittel aus dem Hauptbremszylinder 13 und fördert es zur Hinterradbremse 14. Hierbei verharrt das Trennventil 19 elektrisch betätigt in Schließstellung, wodurch gewährleistet ist, dass der Pumpendruck nicht in den Hauptbremszylinder 13 entweicht.

### Bezugszeichenliste

- 1: Drucksensor
- 2: Drucksensor
- 3: Drucksensor
- 4: Vorderradbremskreis
- 5: Druckkanal
- 6: Einlassventil
- 7: Hauptbremszylinder
- 8: Sackbohrung
- 9: Pumpe
- 10: Hinterradbremskreis
- 11: Aufnahmekörper
- 12: Auslassventil
- 13: Hauptbremszylinder
- 14: Druckkanal
- 15: Rücklaufleitung
- 16: Niederdruckspeicher
- 17: Geräuschdämpfungskammer
- 18: Bremsleitung
- 19: Trennventil
- 20: Umschaltventil
- 21: Saugpfad
- 22: Ausgleichsbehälter
- 23: Elektromotor
- 24: Elektrostecker
- 25: Rückschlagventil
- a: Abstand
- R1: Radbremsanschluss
- R2: Radbremsanschluss
- HZ1: Druckanschluss
- HZ2: Druckanschluss
- VA: Vorderradbremse
- HA: Hinterradbremse
- X: Reihe
- Y: Reihe

## Patentansprüche

1. Kraftradbremsanlage mit einem hydraulisch betätigbaren Vorderrad- und Hinterradbremskreis (4, 10), mit zwei Hauptbremszylindern (7, 13) zur unabhängigen Betätigung beider Bremskreise, mit einem zur Bremsschlupfregelung in jedem Bremskreis vorgesehenen Ein- und Auslassventil (6, 12), mit einer Pumpe (9) zur Druckversorgung des Vorderrad- als auch des Hinterradbremskreises (4, 10), wobei vorzugsweise in Abhängigkeit von einer kraftproportionalen Betätigung des am Vorderradbremskreises (4) angeschlossenen Hauptbremszylinders (7) nicht nur eine Vorderradbremse (VA) sondern auch eine Hinterradbremse (HA) vom Förderdruck der im Hinterradbremskreis (10) wirksamen Pumpe (9) beaufschlagbar ist, wobei zur hydraulischen Verbindung der beiden Hauptbremszylinder (7, 13) mit der Vorder- und Hinterradbremse (VA, HA) für den Vorderrad- und Hinterradbremskreis (4, 10) ein mehrere Druckkanäle (5) aufweisender Aufnahmekörper (11) vorgesehen ist, **dadurch gekennzeichnet, dass** in einer Seitenfläche (A1) des Aufnahmekörpers (11) ein paar mit der Hinterrad- und Vorderradbremse (HA, VA) verbindbare Radbremsanschlüsse (R1, R2) einmünden, die zwischen einem paar Druckanschlüssen (HZ1, HZ2) angeordnet sind, die mit den beiden unabhängig voneinander betätigbaren Hauptbremszylindern (7, 13) verbindbar sind, und dass die beiden Radbremsanschlüsse (R1, R2) zwischen den Längsebenen einer ersten und zweiten Bohrungsreihen (X, Y) angeordnet sind, welche die Ein- und Auslassventile (6, 12) aufweisen.

2. Kraftradbremsanlage nach Anspruch 1, **dadurch gekennzeichnet, dass** ein Abstand (a) zwischen dem Radbremsanschluss (R1, R2) und einer für das Einlassventil (6) im Aufnahmekörper (11) vorgesehenen Aufnahmebohrung derart bemessen ist, dass mittels einer in eine Öffnung der Aufnahmebohrung einmündenden Sackbohrung (8) eine direkte hydraulische Verbindung zum Radbremsanschluss (R1, R2) des Vorderrad- und/oder Hinterradbremskreises (4, 10) hergestellt ist.

3. Kraftradbremsanlage nach Anspruch 1, mit einem ersten Drucksensor (1) zur Erfassung des dem Vorderradbremskreis (4) zuführbaren Hauptzylinderdrucks, sowie mit einem zweiten Drucksensor (2) zur Erfassung des Radbremsdrucks in einer am Hinterradbremskreis (10) angeschlossenen Hinterradbremse (HA), **dadurch gekennzeichnet, dass** der erste Drucksensor (1) in einer vom ersten Druckanschluss (HZ1) abgewandten, seitlich zur ersten Bohrungsreihe (X) angeordneten Aufnahmebohrung eingesetzt ist, die quer zum ersten Druckanschluss (HZ1) in eine Stirnfläche (A2) des Aufnahmekörpers (11) einmündet, und dass der zweite Drucksensor (2) in einer vom zweiten Druckanschluss (HZ2) abgewandten Aufnahmebohrung der zweiten Bohrungsreihe (Y) eingesetzt ist, die quer zum zweiten Druckanschluss (HZ2) in die Stirnfläche (A2) des Aufnahmekörpers (11) einmündet.

4. Kraftradbremsanlage nach wenigstens Anspruch 3,
**dadurch gekennzeichnet, dass** im Aufnahmekörper (11) mehrere Aufnahmebohrungen in der ersten und zweiten Bohrungsreihe (X, Y) angeordnet sind, wobei in der ersten Reihe (X) ausschließlich das zur Bremsschlupfregelung im Vorderradbremskreis (4) erforderliche Ein- und Auslassventil (6, 12) angeordnet ist, während in der zweiten Reihe (Y) ausschließlich das zur Bremsschlupfregelung im Hinterradbremskreis (10) erforderliche Ein- und Auslassventil (6, 12), vorzugsweise ein elektrisches Trennventil (19), sowie der zweite Drucksensor (2) angeordnet ist.

5. Kraftradbremsanlage nach wenigstens Anspruch 3
**dadurch gekennzeichnet, dass** zwischen den beiden Bohrungsreihen (X, Y) ein weiteres paar Aufnahmebohrungen in der Stirnfläche (A2) des Aufnahmekörpers (11) angeordnet sind, in die ein elektrisches Umschaltventil (20) und ein weiterer Drucksensor (3) eingesetzt sind.

6. Kraftradbremsanlage nach Anspruch 5, **dadurch gekennzeichnet, dass** quer durch die für den weiteren Drucksensor (3) und das elektrischen Umschaltventil (20) vorgesehenen Aufnahmebohrungen ein Druckkanal (14) zum zweiten Druckanschluss (HZ2) führt, welcher mit dem für die Betätigung des Hinterradbremskreises (10) vorgesehenen Hauptbremszylinder (13) verbindbar ist.

7. Kraftradbremsanlage nach einem der vorangegangenen Ansprüche, **dadurch gekennzeichnet, dass** die in die Seitenfläche (A1) des Aufnahmekörpers (11) einmündenden beiden Druckanschlüsse (HZ1, HZ2) vorzugsweise fluchtend in der Längsebene der beiden Bohrungsreihen (X, Y) angeordnet sind.

## Claims

1. Power-operated wheel brake system with a hydraulically actuable front-wheel and rear-wheel brake circuit (4, 10), with two brake master cylinders (7, 13) for the independent actuation of the two brake circuits, with an inlet and an outlet valve (6, 12) provided in each brake circuit for skid control, and with a pump (9) for supplying pressure to the front-wheel and the rear-wheel brake circuit (4, 10), not only a front-wheel brake (VA), but also a rear-wheel brake (HA), being capable of being acted upon by the feed pressure of the pump (9), active in the rear-wheel brake circuit (10), preferably as a function of a force-proportional actuation of the brake master cylinder (7) connected to the front-wheel brake circuit (4), a reception body (11) which has a plurality of pressure ducts (5) being provided for the hydraulic connection of the two brake master cylinders (7, 13) to the front-wheel and the rear-wheel brake (VA, HA) for the front-wheel and the rear-wheel brake circuit (4, 10), **characterized in that** a side face (A1) of the reception body (11) has issuing in it a pair of wheel-brake connections (R1, R2) which are connectable to the rear-wheel and the front-wheel brake (HA, VA) and are arranged between a pair of pressure connections (HZ1, HZ2) which are connectable to the two brake master cylinders (7, 13) actuable independently of one another, and **in that** the two wheel-brake connections (R1, R2) are arranged between the longitudinal planes of a first and second bore row (X, Y) which have the inlet and outlet valves (6, 12).

2. Power-operated wheel brake system according to Claim 1, **characterized in that** a spacing (a) between the wheel-brake connection (R1, R2) and a reception bore provided for the inlet valve (6) in the reception body (11) is dimensioned in such a way that a direct hydraulic connection to the wheel-brake connection (R1, R2) of the front-wheel and/or the rear-wheel brake circuit (4, 10) is made by means of a blind bore (8) issuing into an orifice of the reception bore.

3. Power-operated wheel brake system according to Claim 1, with a first pressure sensor (1) for detecting the master cylinder pressure suppliable to the front-wheel brake circuit (4), and with a second pressure sensor (2) for detecting the wheel brake pressure in a rear-wheel brake (HA) connected to the rear-wheel brake circuit (10), **characterized in that** the first pressure sensor (1) is inserted in a reception bore which faces away from the first pressure connection (HZ1) and is arranged laterally with respect to the first bore row (X) and which issues transversely with respect to the first pressure connection (HZ1) into an end face (A2) of the reception body (11), and **in that** the second pressure sensor (2) is inserted in a reception bore of the second bore row (Y), which reception bore faces away from the second pressure connection (HZ2) and issues transversely with respect to the second pressure connection (HZ2) into the end face (A2) of the reception body (11).

4. Power-operated wheel brake system according to at least Claim 3, **characterized in that** a plurality of reception bores are arranged in the first and the second bore row (X, Y) in the reception body (11), only the inlet and the outlet valve (6, 12) required for skid control in the front-wheel brake circuit (4) being arranged in the first row (X), while only the inlet and the outlet valve (6, 12), preferably an electrical isolating valve (19), required for skid control in the rear-wheel brake circuit (10), and also the second pressure sensor (2) being arranged in the second row (Y).

5. Power-operated wheel brake system according to at least Claim 3, **characterized in that** a further pair of reception bores are arranged in the end face (A2) of the reception body (11) between the two bore rows (X, Y), an electrical changeover valve (20) and a further pressure sensor (3) being inserted into the said further pair of reception bores.

6. Power-operated wheel brake system according to Claim 5, **characterized in that** a pressure duct (14) leads transversely through the reception bores provided for the further pressure sensor (3) and the electrical changeover valve (20) to the second pressure connection (HZ2) which is connectable to the brake master cylinder (13) provided for actuating the rear-wheel brake circuit (10).

7. Power-operated wheel brake system according to one of the preceding claims, **characterized in that** the two pressure connections (HZ1, HZ2) issuing into the side face (A1) of the reception body (11) are preferably arranged in alignment in the longitudinal plane of the two bore rows (X, Y).

## Revendications

1. Système de freinage de motocyclette comprenant un circuit de freinage de roue avant et de roue arrière (4, 10) pouvant être actionné de manière hydraulique, avec deux cylindres de freinage principaux (7, 13) pour l'actionnement indépendant des deux circuits de freinage, avec une soupape d'entrée et une soupape de sortie (6, 12) prévues dans chaque circuit de freinage pour la régulation du glissement des freins, avec une pompe (9) pour l'alimentation en pression du circuit de freinage de la roue avant et du circuit de freinage de la roue arrière (4, 10), dans lequel, de préférence en fonction d'un actionnement, proportionnel à la force, du cylindre de freinage principal (7) raccordé au circuit de freinage de la roue avant (4), non seulement un frein de roue avant (VA) mais aussi un frein de roue arrière (HA) peuvent être sollicités par la pression de refoulement de la pompe (9) agissant dans le circuit de freinage de la roue arrière (10), un corps de réception (11) présentant plusieurs canaux de pression (5) étant prévu pour la connexion hydraulique des deux cylindres de freinage principaux (7, 13) aux freins de roue avant et de roue arrière (VA, HA) pour les circuits de freinage de la roue avant et de la roue arrière (4, 10), **caractérisé en ce que** dans une surface latérale (A1) du corps de réception (11) débouche une paire de raccords de freins de roue (R1, R2) pouvant être connectés aux freins de roue arrière et de roue avant (HA, VA), lesquels sont disposés entre une paire de raccords de pression (HZ1, HZ2), qui peuvent être connectés aux deux cylindres de freinage principaux (7, 13) pouvant être actionnés indépendamment l'un de l'autre, et **en ce que** les deux raccords de freins de roue (R1, R2) sont disposés entre les plans longitudinaux d'une première et d'une deuxième rangée d'alésages (X, Y), qui présentent les soupapes d'entrée et de sortie (6, 12).

2. Système de freinage de motocyclette selon la revendication 1, **caractérisé en ce qu'**un espacement (a) entre le raccord de frein de roue (R1, R2) et un alésage de réception prévu pour la soupape d'entrée (6) dans le corps de réception (11) est dimensionné de telle sorte qu'au moyen d'un alésage borgne (8) débouchant dans une ouverture de l'alésage de réception une connexion hydraulique directe avec le raccord de frein de roue (R1, R2) du circuit de freinage de roue avant et/ou de roue arrière (4, 10) soit établie.

3. Système de freinage de motocyclette selon la revendication 1, comprenant un premier capteur de pression (1) pour détecter la pression du cylindre principal pouvant être acheminée au circuit de freinage de la roue avant (4) et un deuxième capteur de pression (2) pour détecter la pression de frein de roue dans un frein de roue arrière (HA) raccordé au circuit de freinage de roue arrière (10), **caractérisé en ce que** le premier capteur de pression (1) est inséré dans un alésage de réception opposé au premier raccord de pression (HZ1), disposé latéralement par rapport à la première rangée d'alésages (X), qui débouche transversalement au premier raccord de pression (HZ1) dans une surface frontale (A2) du corps de réception (11), et **en ce que** le deuxième capteur de pression (2) est inséré dans un alésage de réception opposé au deuxième raccord de pression (HZ2) de la deuxième rangée d'alésages (Y), qui débouche transversalement au deuxième raccord de pression (HZ2) dans la surface frontale (A2) du corps de réception (11).

4. Système de freinage de motocyclette selon au moins la revendication 3, **caractérisé en ce que** plusieurs alésages de réception dans le corps de réception (11) sont disposés dans la première et la deuxième rangée d'alésages (X, Y), dans lequel, dans la première rangée (X), sont disposées exclusivement la soupape d'entrée et la soupape de sortie (6, 12) requises pour la régulation du glissement des freins dans le circuit de freinage de la roue avant (4), tandis que dans la deuxième rangée (Y) sont disposées exclusivement les soupapes d'entrée et de sortie (6, 12) requises pour la régulation du glissement des freins dans le circuit de freinage de la roue arrière (10), de préférence une soupape de coupure électrique (19), ainsi que le deuxième capteur de pression (2).

5. Système de freinage de motocyclette selon au moins la revendication 3, **caractérisé en ce qu'**entre les deux rangées d'alésages (X, Y) est disposée une paire supplémentaire d'alésages de réception dans la surface frontale (A2) du corps de réception (11), dans lesquels sont insérés une soupape d'inversion électrique (20) et un capteur de pression supplémentaire (3).

6. Système de freinage de motocyclette selon la revendication 5, **caractérisé en ce que** transversalement à travers les alésages de réception prévus pour le capteur de pression supplémentaire (3) et la soupape d'inversion électrique (20), un canal de pression (14) conduit au deuxième raccord de pression (HZ2), qui peut être connecté au cylindre de freinage principal (13) prévu pour l'actionnement du circuit de freinage de la roue arrière (10).

7. Système de freinage de motocyclette selon l'une quelconque des revendications précédentes, **caractérisé en ce que** les deux raccords de pression (HZ1, HZ2) débouchant dans la surface latérale (A1) du corps de réception (11) sont disposés de préférence en affleurement dans le plan longitudinal des deux rangées d'alésages (X, Y).
